# EUROPÄISCHE PATENTSCHRIFT

(11) **EP 2 810 746 B1**
(45) Veröffentlichungstag und Bekanntmachung des Hinweises auf die Patenterteilung: **29.06.2016**
(21) Anmeldenummer: 14001753.4
(22) Anmeldetag: 19.05.2014
(51) Int. Cl.: B25J 9/10, B25J 13/00, G21C 19/02, G21C 19/20, G21C 19/32

(54) **Kernanlagenmanipulatorsystem**
Nuclear facility manipulator system
Système de manipulation d'installation nucléaire

(30) Priorität: 03.06.2013 DE 102013009258
(43) Veröffentlichungstag der Anmeldung: 10.12.2014
(73) Patentinhaber: Westinghouse Electric Germany GmbH, 68167 Mannheim (DE)
(72) Erfinder: Kisjuhasz, David, D-68239 Seckenheim (DE); Eckert, Marko, Frankenthal 67227 (DE)
(74) Vertreter: Fritsch, Klaus

(56) Entgegenhaltungen:
- US-A- 4 136 957
- US-A- 4 832 902
- US-A1- 2012 128 113

## Beschreibung

Die Erfindung betrifft ein Kernanlagenmanipulatorsystem, umfassend einen Manipulator mit Bilderfassungsvorrichtung und fernbedienbarem Antrieb, eine Fernbedienvorrichtung sowie eine Auswertevorrichtung zur Auswertung von Bilddaten der Bilderfassungsvorrichtung. Die Erfindung betrifft auch ein Verfahren zur Steuerung eines Manipulators eines erfindungsgemäßen Kernanlagenmanipulatorsystems.

Es ist allgemein bekannt, dass in kerntechnischen Anlagen zur Minimierung jeglichen Betriebsrisikos ein erheblicher Aufwand an Wartung und an Überprüfungen der Anlagenkomponenten beziehungsweise deren Einzelteilen notwendig ist. So sind beispielsweise die Schrauben an den Innenwandungen eines Kernbehälters einer regelmäßigen Prüfung zu unterziehen und bedarfsweise zu ersetzen.

Da es sich in der Regel um radioaktiv höchst belastete Einsatzbereiche handelt, in denen eine entsprechende Wartung oder Reparatur erfolgt, sind zum Schutz des Personals entsprechende Sicherheitsvorkehrungen notwendig. Üblicherweise kommen Manipulatoren zum Einsatz, welche ferngesteuert durch den entsprechenden Einsatzbereich gesteuert werden, wobei die zu überprüfenden Komponenten sequentiell angefahren und untersucht werden. Ein Manipulator ist letztendlich als eine Vorrichtung zu verstehen, welche sich mittels eines Antriebes eigenständig bewegen kann und welche ferngesteuert gelenkt wird. Dies erfolgt vorzugsweise durch vom Manipulator entferntes Bedienpersonal anhand eines Bildes, welches durch eine Kamera am Manipulator aufgenommen wird. Um auch Überprüfungs- beziehungs-weise Wartungsarbeiten durchführen zu können, sind entsprechende Manipulatoren mit Messvorrichtungen - zum Beispiel einem Ultraschallprüfsystem oder auch einer Vorrichtung zum Ersetzen von Schrauben oder dergleichen - ausgestattet.

Häufig reicht aber ein Bildsignal alleine nicht aus, dem Bedienpersonal ein sicheres Lenken des Manipulators durch einen Einsatzbereich zu ermöglichen. Übliche Positionserkennungssysteme sind aufgrund der extrem ungünstigen Randbedingungen in den radioaktiv belasteten Einsatzbereichen, die typischerweise mit schweren Metallplatten ummantelt sind oder auch komplett unter Wasser liegen, nicht geeignet. In solchen Fällen kommen in der Regel Gyroskope zum Einsatz, welche unter Verwendung einer umfangreichen Steuerelektronik zusätzliche Informationen der aktuellen Position des Manipulators bereitstellen.

Im Patentdokument US 4832902 ist eine Vorrichtung zum Auffüllen eines in einem Behälter eingesetzten Nuklearreaktors offenbart, bei welcher ein drehbarer Mastaufbau auf einer verschiebbaren Brücke längs einer auf der Brücke befindlichen Schiene über dem Reaktor bewegbar ist.

Das Patentdokument US 2012 128113 offenbart ein fernsteuerbares System zum Austausch von nuklearem Brennstoff in einer Kernanlage, welches durch einen Servomotor angetrieben ist. Die Ansteuerung des Servomotors erfolgt mittels eines Programmierbaren Logic Controllers (PLC) über ein Mensch-Maschine-Interface.

Das Patentdokument US 4136957 offenbart eine Erkennungseinrichtung zum Erkennen der Form und Lage eines Objektes umfassend eine Lichtquelle, welche auf eine Lichtmessvorrichtung gerichtet ist, wobei sich dazwischen das Objekt befindet, dessen Form und Lage anhand des von ihm geworfenen Schattens bestimmt wird.

Nachteilig am genannten Stand der Technik ist jedoch, dass ein derartiges Positionserkennungssystem relativ schwergewichtig ist, was sich insbesondere bei der Verwendung eines Tauchkörpers als Manipulator sehr nachteilig auswirkt. Zudem erweist sich die umfangreiche Steuerelektronik trotz entsprechender Schutzmaßnahmen als sehr anfällig gegenüber der hohen radioaktiven Belastung im Einsatzbereich.

Ausgehend von diesem Stand der Technik ist es daher Aufgabe der Erfindung, ein Kernmanipulatorsystem bereitzustellen, bei welchem möglichst wenig elektronische Komponenten einer radioaktiven Strahlung ausgesetzt sind und welches zudem noch ein geringes Gewicht aufweist. Aufgabe der Erfindung ist es auch, ein entsprechendes Verfahren zur Positionsbestimmung anzugeben.

Diese Aufgabe wird gelöst durch ein Kernanlagenmanipulatorsystem der eingangs genannten Art. Dieses ist dadurch gekennzeichnet, dass die Auswertevorrichtung derart ausgestaltet ist, dass bei einer Bewegung des Manipulators längs eines Bewegungspfades anhand der Bilddaten sich jeweilige längs des Bewegungspfades befindliche bekannte Objekte automatisch identifiziert werden und im Fall eines Passierens eines solchen Objektes richtungsabhängig ein Objektzähler inkrementiert beziehungsweise dekrementiert wird und dass der Fernbedienvorrichtung der aktuelle Wert des Objektzählers bereitgestellt wird. Die Auswertevorrichtung befindet sich hierbei idealerweise nicht zusammen mit dem Manipulator in dem radioaktiven Einsatzbereich sondern entfernt davon, beispielsweise integriert in die Fernbedienvorrichtung in einem Kontrollraum für das Bedienpersonal.

Die Grundidee der Erfindung besteht darin, letztendlich auf ein zusätzliches Messsystem mit beispielsweise einem Gyroskop zu verzichten und die benötigten Positionsdaten unter Kenntnis und Verwendung der geometrischen Randbedingungen im Einsatzbereich durch eine verbesserte Auswertung der ohnehin verfügbaren Bilddaten zu ermitteln. Die Geometrie des Einsatzbereiches als solche ist stets bekannt, beispielsweise der Grundriss eines Kernbehälters oder der Grundriss einer sekundären Seite eines Dampferzeugers. Zudem zeichnet sich ein derartiger Einsatzbereich auch durch eine gewisse Regelmäßigkeit beziehungsweise Symmetrien und wiederkehrende identische Geometrieabschnitte aus. Ein wiederkehrender Geometrieabschnitt kann beispielsweise eine jeweilige Schraube an der Innenwandung eines Kernbehälters sein, welcher sich über den gesamten Umfang des Kernbehälters in äquidistanten Abständen wiederholt.

Genau diese geometrischen Regelmäßigkeiten macht sich das erfindungsgemäße Kernanlagenmanipulatorsystem zu Nutze, indem bekannte und sich wiederholende Objekte wie Schrauben oder dergleichen bei einer Bewegung längs des Bewegungspfades des Manipulators automatisch gezählt werden. Wenn der Abstand zwischen den jeweiligen Schrauben beziehungsweise Objekten bekannt ist und zudem typischerweise auch noch identisch ist, lässt sich beispielsweise der zurückgelegte Weg anhand der Anzahl der während einer Bewegung passierten Objekte durch einfache Multiplikation mit dem regelmäßigen Abstand zwischen zwei Objekten berechnen. Je nach Bewegungsrichtung des Manipulators ist bei einer Vorwärtsbewegung der Objektzähler beim Passieren eines identifizierten Objektes zu inkrementieren und bei einer Rückwärtsbewegung zu dekrementieren.

Eine Identifikation von Objekten anhand der Bilddaten durch das Auswertesystem ist aufgrund der zumeist klaren geometrischen Formen und der geringen Formvielfalt der in einem zu überprüfenden Einsatzbereich vorhandenen Objekte einer kerntechnischen Anlage einfach umzusetzen. In vorteilhafter Weise werden somit dem Bedienpersonal, welches den Manipulator durch den Einsatzbereich fernlenkt, weitere verlässliche Positionsangaben zur Verfügung gestellt. Durch den Wegfall eines zusätzlichen Positionserfassungssystems ist das Gewicht des Manipulators in vorteilhafter Weise reduziert und die Zahl der elektronischen Komponenten, welche einer radioaktiven Strahlung ausgesetzt sind, reduziert. Die Auswertevorrichtung, welche zweifelsohne eine Vielzahl an elektronischen Komponenten aufweist, ist erfindungsgemäß gerade nicht am Manipulator vorgesehen, sondern in einem geschützten Bereich außerhalb des Einsatzbereiches.

Gemäß einer bevorzugten Ausgestaltungsform des erfindungsgemäßen Kernanlagenmanipulatorsystems ist der Manipulator ein Tauchkörper, also letztendlich in der Art eines Unterseebootes ausgeführt. Dies ermöglicht in vorteilhafter Weise ein Arbeiten an unter Wasser liegenden Bereichen wie dem Kernbehälter, welcher sich seinerseits durch eine sehr regelmäßige Geometrie - insbesondere der Schrauben an seiner Innenwandung - auszeichnet. Eine erfindungsgemäße Positionsermittlung ist daher in besonders guter Weise realisierbar. Ein Antrieb ist beispielsweise mit einer Art Schiffsschraube möglich. Unter einem Tauchkörper ist auch ein Magnetfahrzeug, welches unter Wasser verfährt zu verstehen. Diese könnte beispielsweise einen Linearmotor - ähnlichen Antrieb aufweisen. Bedarfsweise ist es denkbar, einen Tauchkörper längs einer schienenähnlichen Führung zu bewegen. Hierdurch wird die Fernlenkung des Manipulators in besonderer Weise vereinfacht.

Entsprechend einer weiteren Variante des erfindungsgemäßen Kernanlagenmanipulatorsystems ist die Bilderfassungsvorrichtung relativ zum Manipulator schwenkbar, womit deren Bilderfassungsbereich sowohl quer zur Vorschubrichtung des Antriebs als auch zu einem identifizierten und angesteuerten Objekt hin ausrichtbar ist. Eine Bewegung des Manipulators erfolgt in der Regel nicht auf ein Objekt hin sondern quer an einem Objekt vorbei. Dies kann beispielsweise eine Bewegung parallel zur Innenwandung eines Reaktorbehälters sein. Um aus der Bewegung heraus sowohl ein Objekt identifizieren zu können als auch das Passieren des Manipulators an dem Objekt vorbei festzustellen zu können, bietet sich während der Bewegung des Manipulators eine Ausrichtung der Bilderfassungsvorrichtung in einer Richtung quer zur Verfahrrichtung an, welche somit also genau auf die jeweiligen Objekte gerichtet ist. Wenn ein Objekt jedoch beispielsweise zu Untersuchungszwecken gezielt angesteuert werden soll, bietet sich eine Ausrichtung der Bilderfassungsvorrichtung in Fahrtrichtung an. Somit ist das jeweilige Objekt von Interesse ebenfalls im Bilderfassungsbereich und der Auswertevorrichtung werden geeignete Bilddaten zur Verfügung gestellt, um beispielsweise geeignete Steuersignale erzeugen zu können.

Gemäß einer besonders bevorzugten Ausgestaltungsform des erfindungsgemäßen Kernanlagenmanipulatorsystems weist die Fernbedienvorrichtung eine Anzeigevorrichtung zum Darstellen des aktuellen Wertes des Objektzählers auf. Bei einer entsprechend einfachen Geometrie des Einsatzbereiches reicht dem Bedienpersonal bereits die Anzahl der passierten Objekte als Zusatzinformation aus, um eine hinreichende Information über die aktuelle Position des Manipulators zu haben.

Einer weiteren Variante des erfindungsgemäßen Kernanlagenmanipulatorsystems folgend ist dieses dafür vorgesehen, anhand bekannter Abstände der jeweils passierten Objekte zueinander und anhand dem aktuellen Wert des Objektzählers eine Position des Manipulators zu ermitteln und diese anstelle von oder zusammen mit dem aktuellen Wert des Objektzählers auf der Anzeigevorrichtung darzustellen. Dies kann beispielsweise als eine einfache Streckenangabe erfolgen oder aber auch in grafischer Form in einer Karte des bekannten Grundrisses des Einsatzbereiches. Eine derartige Darstellung ist für das Bedienpersonal, welches den Manipulator durch den Einsatzbereich lenken soll, besonders eingängig, so dass eventuelle Navigationsfehler in vorteilhafter Weise weiter reduziert oder vermieden werden können.

Typischerweise werden die zuvor genannten Daten dem Bedienpersonal gemäß einer weiteren Erfindungsvariante zusammen mit den erfassten Bilddaten auf der Anzeigevorrichtung dargestellt, so dass alle verfügbaren für eine fehlerfreie Navigation benötigten Informationen synchron angezeigt werden.

Gemäß einer weiteren Erfindungsvariante weist der Manipulator eine Interaktionsvorrichtung zur Durchführung mechanischer Vorgänge oder zur Aufnahme von Messwerten auf. Somit ist es nicht nur ermöglicht, den Manipulator zu Objekten innerhalb des Einsatzbereiches zu navigieren sondern auch, daran entsprechende Messungen oder Wartungsarbeiten durchzuführen, wie beispielsweise eine Ultraschallmessung oder den Austausch einer Schraube.

Entsprechend einer besonders bevorzugten Ausgestaltungsform des erfindungsgemäßen Kernanlagenmanipulatorsystems ist die Auswertevorrichtung derart ausgestaltet, dass anhand der von der Bilderfassungsvorrichtung bereitgestellten Bilddaten Steuersignale für den Antrieb generiert und umgesetzt werden, so dass eine automatische Positionierung des Manipulators in eine Interaktionsposition gegenüber einem identifizierten Objekt ermöglicht ist. Dies stellt letztendlich eine automatische Positionierfunktion dar, wo ein Regelmechanismus die Position des Manipulators aus einer Vorposition kommend durch Korrekturbewegungen des Antriebs solange ausregelt, bis eine relative Sollposition erreicht ist. Aber auch ein Halten einer aktuellen Position ist mit einem derartigen Verfahren möglich. Im einfachsten Fall ist dies beispielsweise die Position des identifizierten Objektes genau in der Mitte des Bilderfassungsbereiches. Ein automatisches Ausregeln der Position stellt in vorteilhafter Weise eine erhebliche Zeitersparnis dar.

Die Aufgabe der Erfindung wird auch gelöst durch ein Verfahren zur Steuerung eines Manipulators eines erfindungsgemäßen Kernanlagenmanipulatorsystems. Dieses ist gekennzeichnet durch folgende Schritte:
- Positionieren des Manipulators an eine definierte Startposition in einem Einsatzbereich einer kerntechnischen Anlage (damit verbunden auch typischerweise ein Nullen des Objektzählers),
- manuelles Steuern des Manipulators längs eines Bewegungspfades mittels der Fernbedienvorrichtung,
- kontinuierliches Erfassen von Bilddaten durch die Bilderfassungsvorrichtung,
- kontinuierliches Auswerten der Bilddaten der Bilderfassungsvorrichtung derart, dass jeweilige längs des Bewegungspfades befindliche Objekte automatisch identifiziert werden und im Fall eines Passierens eines solchen Objektes richtungsabhängig der Objektzähler inkrementiert beziehungsweise dekrementiert wird,
- Bereitstellung des aktuellen Wertes des Objektzählers an die Fernbedienvorrichtung, so dass dem Bediener für das manuelle Steuern des Manipulators ein Hinweis über dessen aktueller Position im Einsatzbereich der kerntechnischen Anlage gegeben wird.

Die sich daraus ergebenden Vorteile wurden bereits zuvor anhand des erfindungsgemäßen Kernanlagenmanipulatorsystems aufgezeigt.

Eine weitere Variante des erfindungsgemäßen Verfahrens ist gekennzeichnet durch folgende zusätzliche Schritte:
- Unterbrechung der Bewegung des Manipulators in der Nähe eines identifizierten Objektes,
- Ausrichtung des Bilderfassungssystems auf das identifizierte Objekt,
- Generierung und automatische Umsetzung von Steuersignalen für den Antrieb anhand der Bilddaten, so dass der Manipulator gegenüber dem identifizierten Objekt automatisch in eine Interaktionsposition positioniert wird.

Das erfindungsgemäße Zählen von passierten Objekten unterstützt das Bedienpersonal mit zusätzlichen Positionsdaten bei einer Streckenfahrt innerhalb des Einsatzbereiches zu einem Objekt, was untersucht oder gewartet werden soll. Wenn dieses Objekt erreicht ist, wird der Manipulator derart umorientiert, dass die Antriebsrichtung auf das Objekt hinzielt. Ebenso wird der Bilderfassungsbereich der Bilderfassungsvorrichtung auf das identifizierte Objekt gerichtet. Im Anschluss an eine derartige manuelle Grobpositionierung erfolgt mit entsprechenden Korrekturbewegungen des Antriebs anhand der ausgewerteten Bilddaten eine automatische geregelte Feinpositionierung auf eine Interaktionsposition.

Nach Erreichen der Interaktionsposition ist erfindungsgemäß optional eine Durchführung eines mechanischen Vorgangs oder einer Messung mittels der Interaktionsvorrichtung vorgesehen, beispielsweise eine Ultraschallmessung oder der Wechsel einer Schraube.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein exemplarisches Kernanlagenmanipulatorsystem,
- Fig. 2: ein exemplarisches Ablaufbeispiel für eine Positionsermittlung,
- Fig. 3: ein exemplarisches Regelschema für die Positionierung an einer Interaktionsposition sowie
- Fig. 4: ein exemplarisches Positionierungsschema.

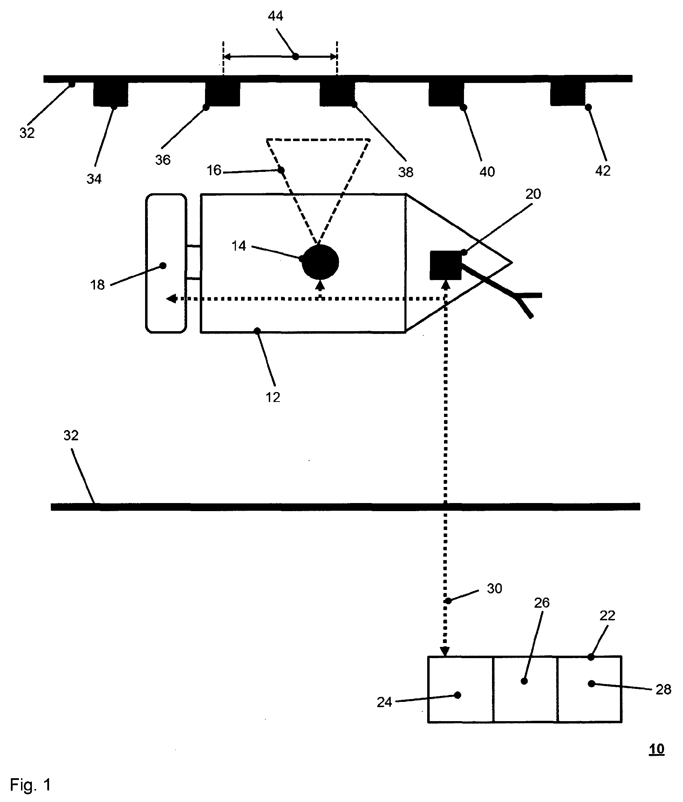

Fig. 1 zeigt ein exemplarisches Kernanlagenmanipulatorsystem in einer schematischen Darstellung 10. Ein Manipulator 12, in diesem Fall ein U-Boot-ähnlicher Tauchkörper, ist zu Wartungszwecken in einem mit Wasser gefülltem und durch Beckenwände 32 begrenztem Becken einer kerntechnischen Anlage befindlich. Das Becken stellt in diesem Fall den Einsatzbereich des Manipulators 12 dar. Der Manipulator 12 weist zudem einen ferngesteuerten Antrieb 18 sowie eine Bilderfassungsvorrichtung 14 auf, deren Bilderfassungsbereich 16 quer zur Fahrtrichtung des Manipulators 12 auf eine Beckenwandung 32 ausgerichtet ist. Während einer Fahrtbewegung des Manipulators parallel zur Beckenwandung 32 gelangen sequenziell mehrere an der Beckenwand befindliche Objekte 34, 36, 38, 40, 42 in den Bilderfassungsbereich 16 der Bilderfassungsvorrichtung.

Eine entfernt von dem Manipulator 12 angeordnete Auswertevorrichtung 24 bekommt über eine bidirektionale Datenkommunikation 30 die von der Bilderfassungsvorrichtung 14 erfassten Bilddaten zur Verfügung gestellt. Unter Verwendung einer Auswerteprogrammes werden die Objekte 34, 36, 38, 40, 42 sukzessive identifiziert und die jeweils während einer Bewegung des Tauchkörpers passierten Objekte gezählt. Die Objekte 34, 36, 38, 40, 42 weisen in diesem Beispiel einen jeweils äquidistanten Abstand zueinander auf, welcher mit dem Pfeil mit der Bezugsziffer 44 angedeutet ist. Somit lässt sich auf einfache Weise die zurückgelegte Strecke aus einer Multiplikation der Anzahl der passierten Objekte mit dem äquidistanten Abstand 44 erhalten.

Die Steuereinheit 24 ist in eine Fernbedienvorrichtung 22 integriert, welche zudem eine Anzeigevorrichtung 26 und eine Eingabevorrichtung 28 aufweist. Die Fernbedienvorrichtung 22 ist also als Schnittstelle zu dem Bedienpersonal zu verstehen, welches über die Anzeigevorrichtung wesentliche Informationen über die Position des Tauchkörpers zur Verfügung gestellt bekommt, beispielsweise das von der Bilderfassungsvorrichtung 14 erfasste Bild sowie die anhand der Anzahl der automatisch gezählten passierten Objekte 34, 36, 38, 40, 42 ermittelte zurückgelegte Wegstrecke. Anhand dieser Informationen ist es dem Bedienpersonal möglich, den Manipulator mittels der Eingabevorrichtung 28 durch das Becken zu manövrieren. Über eine an dem Manipulator 12 angeordnete fernbedienbare Interaktionsvorrichtung 20, in diesem Fall einem Greifer, ist es möglich, entsprechende Wartungs- und Reparaturarbeiten durchzuführen.

Aufgrund der Anordnung der Auswertevorrichtung 24 außerhalb des Beckens ist auf der einen Seite eine besondere Leichtgewichtigkeit des Manipulators erreicht, auf der anderen Seite ist die Auswertevorrichtung auch in vorteilhafter Weise vor der im Becken herrschenden radioaktiven Strahlung geschützt.

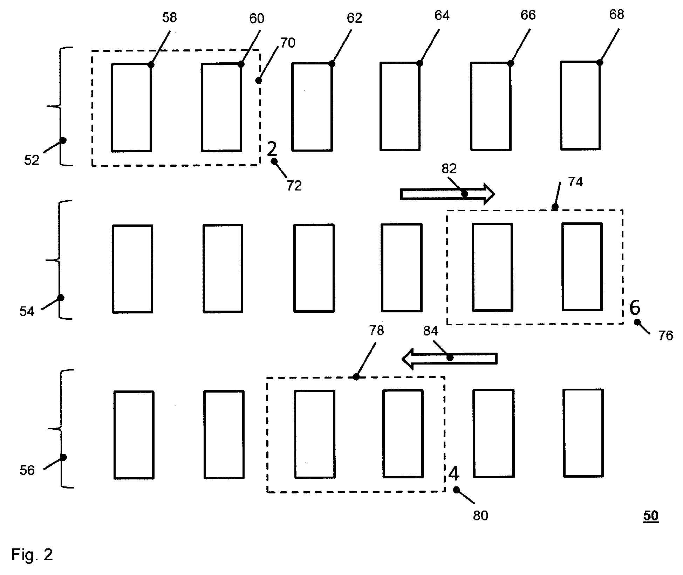

Fig. 2 zeigt ein exemplarisches Ablaufbeispiel für eine Positionsermittlung in einer Skizze 50. Eine Reihe von mehreren Objekten 58, 60, 62, 64, 66, 68 ist in drei verschiedenen Zuständen 52, 54, 56 zu jeweils einem anderen Zeitpunkt zusammen mit dem Bilderfassungsbereich eines nicht gezeigten und sich bewegenden Manipulators dargestellt. Im ersten Zustand 52 erfasst der Bilderfassungsbereich 70 die Objekte 58 und 60, welche bereits beide während der Bewegung des Manipulators passiert wurden. Der zugehörige Wert des Objektzählers 72 beträgt zu diesem Zeitpunkt also 2.

Im nächsten Zustand 54 haben sich der Manipulator und damit auch der Bilderfassungsbereich 74 in Bewegungsrichtung 82 um vier Objektfelder weiter nach rechts bewegt. Der zugehörige Wert des Objektzählers 76 beträgt damit also sechs. Im dritten Zustand 56 hat sich die Bewegungsrichtung 84 des Manipulators nunmehr umgedreht und er ist wieder zwei Felder zurückgefahren. Der Bilderfassungsbereich 76 erfasst nunmehr die Objekte 62 und 64. Aufgrund der Richtungsänderung hat ein Passieren eines der Objekte 58, 60, 62, 64, 66, 68 eine jeweilige Dekrementierung des Objektzählers zur Folge, so dass der Wert des Objektzählers 80 in diesem Zustand 54 nunmehr 4 beträgt,

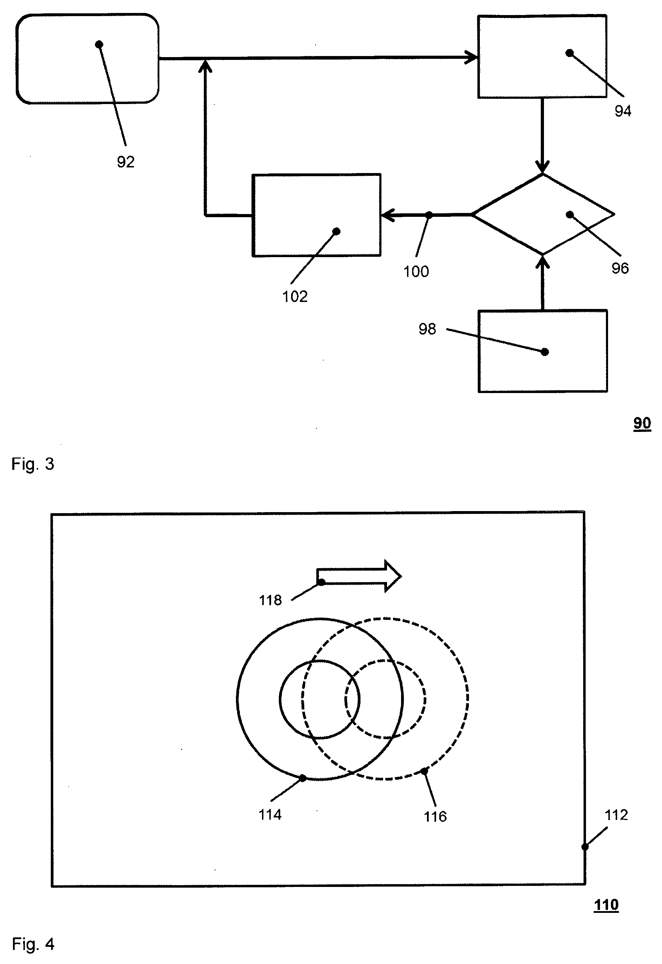

Fig. 3 zeigt ein exemplarisches Regelschema für die Positionierung an einer Interaktionsposition in einer schematischen Darstellung 90. Eine anzufahrende Position 92 wird durch ein Kamerabild 94 erfasst. Im Rahmen einer Bildauswertung 96 wird eine Differenz zu einer Positionsvorgabe 98, in diesem Fall dem Halten der Position, gebildet. Dies bedeutet praktisch, dass das Objekt beispielsweise stets in genau der Mitte des Bilderfassungsbereiches liegen soll. Ein etwaiges Abdriften des Objektes aus der Mitte des Bilderfassungsbereiches, also letztendliche eine Bildbewegung 100, wird der Antriebskontrolleinheit 102 des Antriebes des zugehörigen Manipulators bereitgestellt. Diese generiert daraus Steuersignale für den Antrieb, welcher eine gegenläufige Driftbewegung des Manipulators bewirkt, so dass letztendlich das Objekt wieder in der Sollposition in der Mitte des Bilderfassungsbereiches liegt. Eine derartige Positionshaltefunktion ist beispielsweise während Wartungsarbeiten an einem Objekt von hohem Vorteil, da diese in der Regel aus einer konstanten Relativposition zu erfolgen hat.

Fig. 4 zeigt ein exemplarisches Positionierungsschema zu dem Regelschema aus Fig. 3 in einer Skizze 110. In der Mitte eines Bilderfassungsbereiches 112 ist mit durchgezogenen Linien ein Objekt in seiner Sollposition 114 gezeigt. Mit der Bezugsziffer 116 und in gestrichelten Linien ist dasselbe Objekt in einer Abweichposition dargestellt. Entsprechend dem Regelschema der Fig. 3 wird der Antrieb des Manipulators derart angesteuert, dass dieser eine Korrekturbewegung 118 beziehungsweise eine Gegendriftbewegung ausführt, so dass das Objekt letztendlich wieder genau in der Mitte des Bilderfassungsbereiches 112 liegt.

### Bezugszeichenliste

- 10: exemplarisches Kernanlagenmanipulatorsystem
- 12: Manipulator
- 14: Bilderfassungsvorrichtung
- 16: Bilderfassungsbereich von Bilderfassungssystem
- 18: fernbedienbarer Antrieb
- 20: Interaktionsvorrichtung
- 22: Fernbedienvorrichtung
- 24: Auswertevorrichtung
- 26: Anzeigevorrichtung
- 28: Eingabevorrichtung
- 30: Datenkommunikation
- 32: Beckenwand
- 34: erstes Objekt an Beckenwand
- 36: zweites Objekt an Beckenwand
- 38: drittes Objekt an Beckenwand
- 40: viertes Objekt an Beckenwand
- 42: fünftes Objekt an Beckenwand
- 44: Abstand zwischen Objekten
- 50: exemplarisches Ablaufbeispiel für Positionsermittlung
- 52: Zustand zu einem ersten Zeitpunkt
- 54: Zustand zu einem zweiten Zeitpunkt
- 56: Zustand zu einem dritten Zeitpunkt
- 58: erstes Objekt
- 60: zweites Objekt
- 62: drittes Objekt
- 64: viertes Objekt
- 66: fünftes Objekt
- 68: sechstes Objekt
- 70: Bilderfassungsbereich zu erstem Zeitpunkt
- 72: Wert des Objektzählers zu erstem Zeitpunkt
- 74: Bilderfassungsbereich zu zweitem Zeitpunkt
- 76: Wert des Objektzählers zu zweitem Zeitpunkt
- 78: Bilderfassungsbereich zu drittem Zeitpunkt
- 80: Wert des Objektzählers zu drittem Zeitpunkt
- 82: Vorwärtsbewegungsrichtung
- 84: Rückwärtsbewegungsrichtung
- 90: exemplarisches Regelschema für Positionierung an Interaktionsposition
- 92: anzufahrende Position
- 94: Kamerabild
- 96: Bildauswertung
- 98: Regelvorgabe Halten der Position
- 100: Bildbewegung
- 102: Antriebskontrolleinheit
- 110: exemplarisches Positionierungsschema
- 112: Bilderfassungsbereich
- 114: Objekt in Sollposition im Bilderfassungsbereich
- 116: Objekt in Abweichposition im Bilderfassungsbereich
- 118: durch Antrieb bewirkte Korrekturbewegung

## Patentansprüche

1. Kernanlagenmanipulatorsystem (10), umfassend einen Manipulator (12) mit Bilderfassungsvorrichtung (14) und fernbedienbarem Antrieb (18), eine Fernbedienvorrichtung (22) sowie eine Auswertevorrichtung (24) zur Auswertung von Bilddaten der Bilderfassungsvorrichtung (14),
**dadurch gekennzeichnet,**
**dass** die Auswertevorrichtung (24) derart ausgestaltet ist, dass bei einer Bewegung des Manipulators (12) längs eines Bewegungspfades anhand der Bilddaten sich jeweilige längs des Bewegungspfades befindliche bekannte Objekte (34, 36, 38, 40, 42, 58, 60, 62, 64, 66, 68, 114) automatisch identifiziert werden und im Fall eines Passierens eines solchen Objektes richtungsabhängig (82 ⇔ 84) ein Objektzähler inkrementiert beziehungsweise dekrementiert wird und dass der Fernbedienvorrichtung (22) der aktuelle Wert des Objektzählers (72, 76, 80) bereitgestellt wird.

2. Kernanlagenmanipulatorsystem nach Anspruch 1, **dadurch gekennzeichnet, dass** der Manipulator (12) ein Tauchkörper ist.

3. Kernanlagenmanipulatorsystem nach Anspruch 1 oder 2, **dadurch gekennzeichnet, dass** die Bilderfassungsvorrichtung (14) relativ zum Manipulator (12) schwenkbar ist und somit deren Bilderfassungsbereich (16, 72, 76, 80, 112) sowohl quer zur Vorschubrichtung des Antriebs (18) als auch zu einem identifizierten Objekt (114) hin ausrichtbar ist.

4. Kernanlagenmanipulatorsystem nach einem der vorherigen Ansprüche, **dadurch gekennzeichnet, dass** die Fernbedienvorrichtung (22) eine Anzeigevorrichtung (26) zum Darstellen des aktuellen Wertes des Objektzählers (72, 76, 80) aufweist.

5. Kernanlagenmanipulatorsystem nach Anspruch 4, **dadurch gekennzeichnet, dass** dieses dafür vorgesehen ist, anhand bekannter Abstände (44) der jeweils passierten Objekte (34, 36, 38, 40, 42, 58, 60, 62, 64, 66, 68, 114) zueinander und anhand des aktuellen Wertes des Objektzählers (72, 76, 80) eine Position des Manipulators (12) zu ermitteln und diese anstelle von oder zusammen mit dem aktuellen Wert des Objektzählers (72, 76, 80) auf der Anzeigevorrichtung (26) darzustellen.

6. Kernanlagenmanipulatorsystem nach einem der Ansprüche 4 oder 5, **dadurch gekennzeichnet, dass** die Fernbedienvorrichtung (22) dafür vorgesehen ist, die erfassten Bilddaten auf der Anzeigevorrichtung (26) darzustellen.

7. Kernanlagenmanipulatorsystem nach einem der vorherigen Ansprüche, **dadurch gekennzeichnet, dass** der Manipulator (12) eine Interaktionsvorrichtung (20) zur Durchführung mechanischer Vorgänge oder zur Aufnahme von Messwerten aufweist.

8. Kernanlagenmanipulatorsystem nach einem der vorherigen Ansprüche, **dadurch gekennzeichnet, dass** die Auswertevorrichtung (24) derart ausgestaltet ist, dass anhand der von der Bilderfassungsvorrichtung (16) bereitgestellten Bilddaten Steuersignale für den Antrieb (20) generiert und umgesetzt werden, so dass eine automatische Positionierung des Manipulators (12) in eine Interaktionsposition gegenüber einem identifizierten Objekt (114) ermöglicht ist.

9. Verfahren zur Steuerung eines Manipulators eines Kernanlagenmanipulatorsystems nach einem der Ansprüche 1 bis 8, **gekennzeichnet durch** folgende Schritte:
• Positionieren des Manipulators (12) an eine definierte Startposition in einem Einsatzbereich einer kerntechnischen Anlage,
• manuelles Steuern des Manipulators (12) längs eines Bewegungspfades mittels der Fernbedienvorrichtung (22),
• kontinuierliches Erfassen von Bilddaten **durch** die Bilderfassungsvorrichtung (16),
• kontinuierliches Auswerten der Bilddaten der Bilderfassungsvorrichtung (16) derart, dass jeweilige längs des Bewegungspfades befindliche Objekte (34, 36, 38, 40, 42, 58, 60, 62, 64, 66, 68, 114) automatisch identifiziert werden und im Fall eines Passierens eines solchen Objektes richtungsabhängig (82 ⇔ 84) der Objektzähler inkrementiert beziehungsweise dekrementiert wird,
• Bereitstellung des aktuellen Wertes des Objektzählers (72, 76, 80) an die Fernbedienvorrichtung (22), so dass dem Bediener für das manuelle Steuern des Manipulators (12) ein Hinweis über dessen aktueller Position im Einsatzbereich der kerntechnischen Anlage gegeben wird.

10. Verfahren nach Anspruch 9, **gekennzeichnet durch** folgende zusätzliche Schritte:
• Unterbrechung der Bewegung des Manipulators (12) in der Nähe eines identifizierten Objektes (114),
• Ausrichtung des Bilderfassungssystems auf das identifizierte Objekt (114),
• Generierung und automatische Umsetzung von Steuersignalen für den Antrieb (20) anhand der Bilddaten, so dass der Manipulator (12) gegenüber dem identifizierten Objekt (114) automatisch in eine Interaktionsposition positioniert wird.

11. Verfahren nach Anspruch 10, **gekennzeichnet durch** folgenden zusätzlichen Schritt:
• nach Erreichen der Interaktionsposition Durchführung eines mechanischen Vorgangs oder einer Messung mittels der Interaktionsvorrichtung (20).

## Claims

1. Nuclear facility manipulator system (10), comprising a manipulator (12) with image recording device (14) and remote-controllable drive (18), a remote control device (22), and an evaluation device (24) for evaluating image data from the image recording device (14),
**characterized**
**in that** the evaluation device (24) is designed such that, during a movement of the manipulator (12) along a movement path, respective known objects (34, 36, 38, 40, 42, 58, 60, 62, 64, 66, 68, 114) situated along the movement path are automatically identified on the basis of the image data, and, in the event of such an object being passed, an object counter is incremented or decremented in direction-dependent fashion (82 ⇔ 84), and in that the present value of the object counter (72, 76, 80) is provided to the remote control device (22).

2. Nuclear facility manipulator system according to Claim 1, **characterized in that** the manipulator (12) is a submerged body.

3. Nuclear facility manipulator system according to Claim 1 or 2, **characterized in that** the image recording device (14) is pivotable relative to the manipulator (12), and thus the image recording field (16, 72, 76, 80, 112) thereof can be oriented both transversely with respect to the advancing direction of the drive (18) and also toward an identified object (114).

4. Nuclear facility manipulator system according to one of the preceding claims, **characterized in that** the remote control device (22) has a display device (26) for displaying the present value of the object counter (72, 76, 80).

5. Nuclear facility manipulator system according to Claim 4, **characterized in that** said nuclear facility manipulator system is provided for determining a position of the manipulator (12) on the basis of known spacings (44) of the respectively passed objects (34, 36, 38, 40, 42, 58, 60, 62, 64, 66, 68, 114) to one another and on the basis of the present value of the object counter (72, 76, 80), and to display said position, instead of or together with the present value of the object counter (72, 76, 80), on the display device (26).

6. Nuclear facility manipulator system as claimed in either of claims 4 and 5, **characterized in that** the remote control device (22) is provided for displaying the recorded image data on the display device (26).

7. Nuclear facility manipulator system as claimed in one of the preceding claims, **characterized in that** the manipulator (12) has an interaction device (20) for carrying out mechanical processes or for recording measurement values.

8. Nuclear facility manipulator system as claimed in one of the preceding claims, **characterized in that** the evaluation device (24) is designed such that, on the basis of the image data provided by the image recording device (16), control signals for the drive (20) are generated and implemented, such that automatic positioning of the manipulator (12) into an interaction position relative to an identified object (114) is made possible.

9. Method for controlling a manipulator of a nuclear facility manipulator system according to one of Claims 1 to 8, **characterized by** the following steps:
• positioning the manipulator (12) at a defined starting position in an operating area of a nuclear facility,
• manually controlling the manipulator (12) along a movement path by way of the remote control device (22),
• continuously recording image data by way of the image recording device (16),
• continuously evaluating the image data from the image recording device (16), in such a way that respective objects (34, 36, 38, 40, 42, 58, 60, 62, 64, 66, 68, 114) situated along the movement path are automatically identified and, in the event of such an object being passed, an object counter is incremented or decremented in direction-dependent fashion (82 ⇔ 84),
• providing the present value of the object counter (72, 76, 80) to the remote control device (22), such that, for the manual control of the manipulator (12), the operator is provided with an indication regarding the present position of said manipulator in the operating area of the nuclear installation.

10. Method according to Claim 9, **characterized by** the following additional steps:
• stopping the movement of the manipulator (12) in the vicinity of an identified object (114),
• orienting the image recording system towards the identified object (114),
• generating and automatically implementing control signals for the drive (20) on the basis of the image data, such that the manipulator (12) is automatically positioned into an interaction position relative to the identified object (114).

11. Method according to Claim 10, **characterized by** the following additional step:
• after reaching the interaction position, carrying out a mechanical process or a measurement by way of the interaction device (20).

## Revendications

1. Système manipulateur pour centrale nucléaire (10), comprenant un manipulateur (12) pourvu d'un dispositif d'acquisition d'image (14) et d'un entraînement (18) télécommandable, un dispositif de télécommande (22) ainsi qu'un dispositif d'interprétation (24) destiné à interpréter des données d'image du dispositif d'acquisition d'image (14), **caractérisé en ce**
**que** le dispositif d'interprétation (24) est configuré de telle sorte que lors d'un mouvement du manipulateur (12) le long d'un trajet de mouvement, les objets (34, 36, 38, 40, 42, 58, 60, 62, 64, 66, 68, 114) connus qui se trouvent respectivement le long du trajet de mouvement sont identifiés automatiquement à l'aide des données d'image et, dans le cas du passage à côté d'un tel objet, un compteur d'objets est incrémenté ou décrémenté en fonction de la direction (82 ⇔ 84), et en ce que la valeur actuelle du compteur d'objets (72, 76, 80) est délivrée au dispositif de télécommande (22).

2. Système manipulateur pour centrale nucléaire selon la revendication 1, **caractérisé en ce que** le manipulateur (12) est un corps d'immersion.

3. Système manipulateur pour centrale nucléaire selon la revendication 1 ou 2, **caractérisé en ce que** le dispositif d'acquisition d'image (14) est pivotant par rapport au manipulateur (12) et sa zone d'acquisition d'image (16, 72, 76, 80, 112) peut ainsi être orientée transversalement à la fois par rapport au sens d'avance de l'entraînement (18) et par rapport à un objet (114) identifié.

4. Système manipulateur pour centrale nucléaire selon l'une des revendications précédentes, **caractérisé en ce que** le dispositif de télécommande (22) possède un dispositif d'affichage (26) destiné à afficher la valeur actuelle du compteur d'objets (72, 76, 80).

5. Système manipulateur pour centrale nucléaire selon la revendication 4, **caractérisé en ce que** celui-ci est conçu pour déterminer une position du manipulateur (12) à l'aide des écarts connus (44) entre les objets (34, 36, 38, 40, 42, 58, 60, 62, 64, 66, 68, 114) devant lequel il passe respectivement et à l'aide de la valeur actuelle du compteur d'objets (72, 76, 80) et pour représenter celle-ci sur le dispositif d'affichage (26) à la place de ou conjointement avec la valeur actuelle du compteur d'objets (72, 76, 80).

6. Système manipulateur pour centrale nucléaire selon l'une des revendications 4 ou 5, **caractérisé en ce que** le dispositif de télécommande (22) est conçu pour représenter les données d'image acquises sur le dispositif d'affichage (26).

7. Système manipulateur pour centrale nucléaire selon l'une des revendications précédentes, **caractérisé en ce que** le manipulateur (12) possède un dispositif d'interaction (20) destiné à l'exécution d'opération mécaniques ou à la collecte de valeurs mesurées.

8. Système manipulateur pour centrale nucléaire selon l'une des revendications précédentes, **caractérisé en ce que** le dispositif d'interprétation (24) est configuré de telle sorte que des signaux de commande pour l'entraînement (20) sont générés à l'aide des données d'image délivrées par le dispositif d'acquisition d'image (16) et sont convertis de manière à rendre possible un positionnement automatique du manipulateur (12) dans une position d'interaction par rapport à un objet (114) identifié.

9. Procédé de commande d'un manipulateur d'un système manipulateur pour centrale nucléaire selon l'une des revendications 1 à 8, **caractérisé par** les étapes suivantes :
* positionnement du manipulateur (12) à une position de départ définie dans une zone d'utilisation d'une installation nucléaire,
* commande manuelle du manipulateur (12) le long d'un trajet de mouvement au moyen du dispositif de télécommande (22),
* acquisition continue de données d'image par le dispositif d'acquisition d'image (16),
* interprétation continue des données d'image du dispositif d'acquisition d'image (16) de telle sorte que les objets (34, 36, 38, 40, 42, 58, 60, 62, 64, 66, 68, 114) qui se trouvent respectivement le long du trajet de mouvement sont identifiés automatiquement et, dans le cas du passage à côté d'un tel objet, le compteur d'objets est incrémenté ou décrémenté en fonction de la direction (82 ⇔ 84)
* délivrance de la valeur actuelle du compteur d'objets (72, 76, 80) au dispositif de télécommande (22), de manière à donner à l'opérateur, en vue de la commande manuelle du manipulateur (12), une indication sur sa position actuelle dans la zone d'utilisation de l'installation nucléaire.

10. Procédé selon la revendication 9, **caractérisé par** les étapes supplémentaires suivantes :
* interruption du mouvement du manipulateur (12) à proximité d'un objet (114) identifié,
* orientation du système d'acquisition d'images sur l'objet (114) identifié,
* génération et conversion automatique de signaux de commande pour l'entraînement (20) à l'aide des données d'image, de sorte que le manipulateur (12) soit positionné automatiquement dans une position d'interaction par rapport à l'objet (114) identifié.

11. Procédé selon la revendication 10, **caractérisé par** l'étape supplémentaire suivante :
* après avoir atteint la position d'interaction, exécution automatique d'une opération mécanique ou d'une mesure au moyen du dispositif d'interaction (20).
